(19) **Europäisches Patentamt European Patent Office Office européen des brevets**

(11) **EP 1 818 165 B1**

(12) **EUROPEAN PATENT SPECIFICATION**

(45) Date of publication and mention of the grant of the patent:
**05.03.2014 Bulletin 2014/10**

(21) Application number: **05806547.5**

(22) Date of filing: **16.11.2005**

(51) Int Cl.:
***B29D 30/60*** (2006.01)     ***B29D 30/08*** (2006.01)
***B29K 21/00*** (2006.01)

(86) International application number:
**PCT/JP2005/021028**

(87) International publication number:
**WO 2006/054592 (26.05.2006 Gazette 2006/21)**

(54) **METHOD OF WRAPPING RUBBER STRIP MATERIAL AROUND MOLDING DRUM**

VERFAHREN ZUM UMWICKELN EINER FORMTROMMEL MIT KAUTSCHUKSTREIFENMATERIAL

PROCÉDÉ D ENROULEMENT D UN MATÉRIAU EN BANDE DE CAOUTCHOUC AUTOUR D UN TAMBOUR DE MOULAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.11.2004 JP 2004333947**

(43) Date of publication of application:
**15.08.2007 Bulletin 2007/33**

(73) Proprietor: **Bridgestone Corporation Tokyo 104-8340 (JP)**

(72) Inventors:
• **OTA, Hidehisa,
Bridgestone Corp. Technical Center
Tokyo 1878531 (JP)**
• **IIZUKA, Shuhei,
Bridgestone Corp. Technical Center
Tokyo 1878531 (JP)**

(74) Representative: **Waldren, Robin Michael et al
Marks & Clerk LLP
90 Long Acre
London
WC2E 9RA (GB)**

(56) References cited:
WO-A1-95/23686          JP-A- 61 037 422
JP-A- 2000 246 812      JP-A- 2001 072 335
JP-A- 2004 025 533      JP-A- 2004 082 436
JP-A- 2005 186 586      US-B1- 6 695 606

## Description

## Technical Field

The present invention relates to a method of winding a rubber strip material around a forming drum to mold a tire structural member and the like by winding the rubber strip material around the forming drum.

## Background Art

Tire structural members of an inflated tire, composed of various different materials, is formed on a forming drum and then vulcanized. As a method of forming a tire structural member around a forming drum with high accuracy at all times despite of a material, there has already been proposed a method of directly winding around a forming drum a rubber strip material extruded from an extruder (refer to, for example, Patent Document 1).

Patent Document 1: Japanese Patent Application Publication No. 7-94155

In the method disclosed in Patent Document 1, a rubber material is directly extruded from a constant-volume extruder onto a support body (forming drum) in a state in which an outlet orifice (die) of the constant-volume extruder is located in the vicinity of a position at which the rubber material is arranged on the support body in such a manner that the rubber material extruded from the outlet orifice has a width smaller than that of the cross section of a tire material (tire structural member) so that the tire material is produced when the support member rotates a plurality of times.

Attention is drawn to the disclosures of JP 2004-025533 and US 6695606.

## Disclosure of the Invention

## Problems to be Solved by the Invention

In the known method, the rubber material is extruded directly onto the support body from the outlet orifice of the constant-volume extruder located in the vicinity of the support body. For this reason, the rubber material, which is extruded from the outlet orifice and swelled (due to the die swelling), is wound around the support member as it is. Since the rubber material, which is swelled on the support body after it is formed by being wound, is contracted, the shape of the rubber material is not stabilized.

In particular, a rubber material having a large amount of die swelling also has a large contraction rate. For this reason, there is a possibility of occurrence of an undesirable phenomenon such as exfoliation and the like of the rubber material because the rubber material is contracted after it is formed on the support body.

Accordingly, an object of the present invention, which has been made in view of the above problems, is to provide a method of winding a rubber strip material around a forming drum by which a tire structural member can be formed around the forming drum with high accuracy at all times independently of the material used and which is excellent in workability so that the tire structural has good shape stability after it is formed.

## Means for Solving the Problems

To achieve the above object, the present invention provides a method of winding a rubber strip material by an applicator, according to claim 1.

According to a preferred embodiment of the invention, as defined in claim 2, the applicator is an applying roller for guiding the rubber strip material to the forming drum, pressing it against the forming drum, and applying it to the forming drum

## Effect of the Invention

According to the method of the present invention for winding the rubber strip material around the forming drum, the peripheral speed of the forming drum is set lower than the extrusion speed of the rubber strip material from the die of the extruder. Therefore, the rubber strip material stretched or swelled (due to the die swelling) by being extruded from the die is allowed to be contracted in the path from the die to the forming drum and can be smoothly wound around the forming drum and formed with good workability without being loosened.

Accordingly, after the rubber strip material is wound around the forming drum, exfoliation and the like of the rubber stripmaterial is preventedbeforehand, and thus, shape stability of the material can be enhanced after it is formed.

The method of the present invention is effective particularly when a rubber strip material having a large contraction rate is used.

Further, since the peripheral speed of the forming drum is set to the reduced speed of about 0.9 times the extrusion speed of the rubber strip material from the extruder, the rubber strip material can be easily contracted without being swelled in the path from the die to the forming drum and can be smoothly wound around the forming drum without being loosened. Thus, the method of the present invention is excellent in workability.

In the method of the present invention for winding the rubber strip material around the forming drum, the applying roller is used as the applicator to guide the rubber strip material to the forming drum, to press it against the forming drum, and to apply it to the forming drum. Consequently, the applying roller can be rotated at the same peripheral speed as that of the forming drum and can wind the rubber strip material around the forming drum smoothly and securely.

## Brief Description of the Drawings

FIG. 1 is a schematic side elevational view showing an example of a rubber strip material winding apparatus for executing a method of winding a rubber strip material around a forming drum of the present invention;

FIG. 2 is a plan view of the rubber strip material winding apparatus; and

FIG. 3 is a graph showing a contraction rate of a rubber material after it is formed.

Reference Numerals

S ... Rubber strip material, 1 ... Extruder, 2 ... Die, 5 ... Forming drum, 6 ... Applying roller

Best Mode for Carrying Out the Invention

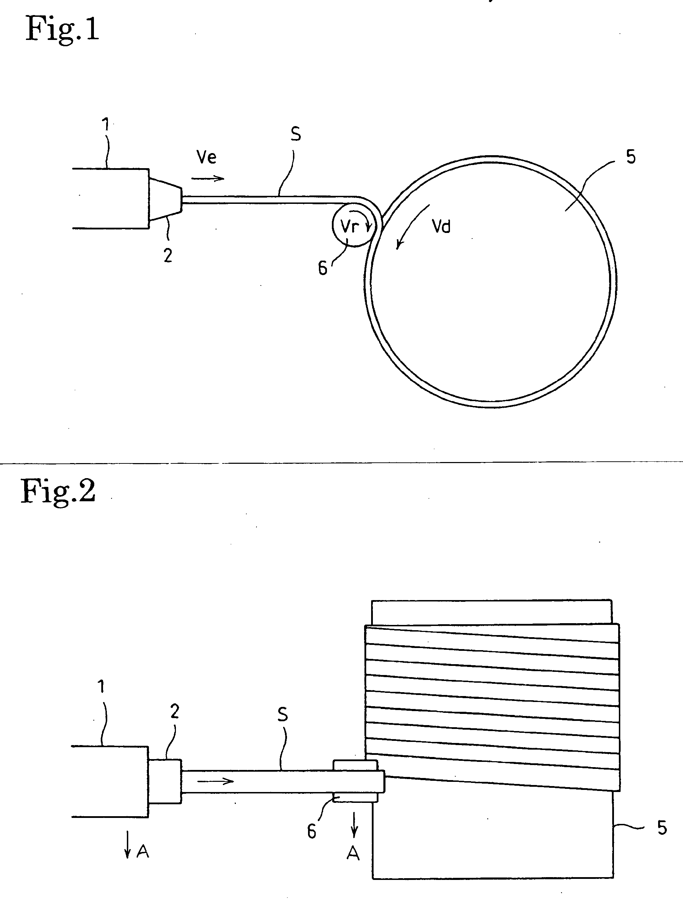

An embodiment of the present invention will be described with reference to FIGS. 1 to 3.

A rubber strip material winding apparatus for executing a method of winding a rubber strip material around a forming drum of the present invention includes an extruder 1 with a die 2 . The extruder 1 is arranged to extrude a rubber strip material S through the die 2.

A forming drum 5 is arranged at a position spaced apart from the die 2 by a predetermined distance in a direction in which the rubber strip material S is extruded from the die 2, and an application roller 6 is arranged in contact with the forming drum 5 so as to be pressed against the forming drum 5. The applying roller 6 is an example of an applicator for applying the rubber strip material S onto the peripheral surface of the forming drum 5. Other types of the applicator may be used in place of the applying roller.

The rubber strip material S is formed in a strip shape and extruded by the die 2, wound around the applying roller 6 located forward of the die 2 from above the roller 6, clamped between the applying roller 6 and the forming drum 5, and pressed against and applied by the applying roller 6 around the forming drum 5 which is being rotated.

The applying roller 6 and the extruder 1 are supported on the same moving table and can be relatively moved with respect to the forming drum 5 installed at a fixed position in a direction along a rotating shaft of the forming drum 5. Accordingly, the rubber strip material S is wound around the forming drum 5 while the applying roller 6 and the extruder 1 are moved in the direction of the rotating shaft of the applying roller 6 as shown by an arrow A in FIG. 2 with respect to the rotating forming drum 5 disposed at a fixed position, whereby the rubber strip material S is wound around the forming drum 5 in a spiral state.

The moving speed of the applying roller 6 and the extruder 1 in the direction (direction of the arrow A) of the rotating shaft of the forming drum 5 is adjusted so that a side edge of a part of the rubber strip material S to be newly wound is overlapped on a side edge of the convolution of the rubber strip material S wound during the previous rotation of the forming drum, whereby a cylindrical continuous tire structural member is formed around the peripheral surface of the forming drum 5.

The extrusion speed Ve (FIG. 1) of the rubber strip material S extruded from the die 2 of the extruder 1 is set to be approximately the same as a conventional extrusion speed so that rubber is not burnt by temperature increase of the rubber strip material S caused by the extrusion.

In contrast, the rotating forming drum 5 is set to have a peripheral speed Vd which is not equal to the extrusion speed Ve but is lower than the extrusion speed Ve. The peripheral speed Vd is determined, for example, to be about 0.9 times the extrusion speed Ve (Ve x 0.9).

Note that when another member has already been wound around the forming drum 5, the peripheral speed Vd of the forming drum 5 means a peripheral speed of the outer periphery of the other member.

The applying roller 6 is an idler roller and rotated by the rotation of the forming drum 5 through the rubber strip material S, so that the peripheral speed Vr of the applying roller 6 is the same as the peripheral speed Vd of the forming drum 5.

Thus, the following relation is established among the peripheral speed Vd of the forming drum 5, the peripheral speed Vr of the applying roller 6, and the extrusion speed Ve of the extruder 1.

$$\mathtt{Vd\ =\ Vr\ =\ Ve\ \times\ 0.9}$$

Since the peripheral speed Vd of the forming drum 5 and the peripheral speed Vr of the applying roller 6 are lower than the extrusion speed Ve, the rubber strip material S extruded from the die 2 of the extruder 1 is not subjected to tensile force at all between the die 2 and the applying roller 6 and tends to be loosened.

Accordingly, the rubber strip material S which is extruded from the die 2 and is stretched or swells (die swelling) is not subjected to tensile force, whereby it can be easily contracted between the die 2 and the applying roller 6.

Since the rubber strip material S extruded from the die 2 of the extruder 1 at the extrusion speed Ve is wound around the forming drum 5 at a lower speed than the extrusion speed, about 90% of the extrusion speed Ve, looseness or slackness which tends to occur in the rubber strip material S is almost eliminated by contraction of the rubber strip material S itself.

For this reason, the rubber strip material S is formed in such a manner that it is applied to and wound around the forming drum 5 by the applying roller 6 in a stabilized state due to the contraction. Accordingly, the rubber material is not largely contracted after it is formed.

In the embodiment described above, the rubber strip material S extruded from the die 2 at the extrusion speed Ve is wound around the forming drum 5 at the reduced speed of about 90% of the extrusion speed Ve. However, a rubber material having a large degree of swelling has a large contraction rate, so that it is preferable to appropriately set the peripheral speed Vd to about 0.9 times the extrusion speed Ve according to the contraction rate of the rubber material without being limited exactly to 0.9 times, to enable the rubber strip material S to be contracted in the path from the die 2 to the forming drum 5.

It has been found that the peripheral speed Vd is set preferably to 0.6 to 0.95 times the extrusion speed Ve so that the rubber strip material S can be contracted in the path from the die 2 to the forming drum 5 to be wound around the forming drum in a state without looseness. When the peripheral speed Vd is smaller than 0.6 times, the rubber strip material S is loosened, whereas when the peripheral speed Vd exceeds 0.95 times, the effect of reducing the speed of the forming drum 5 according to the present invention is greatly lowered.

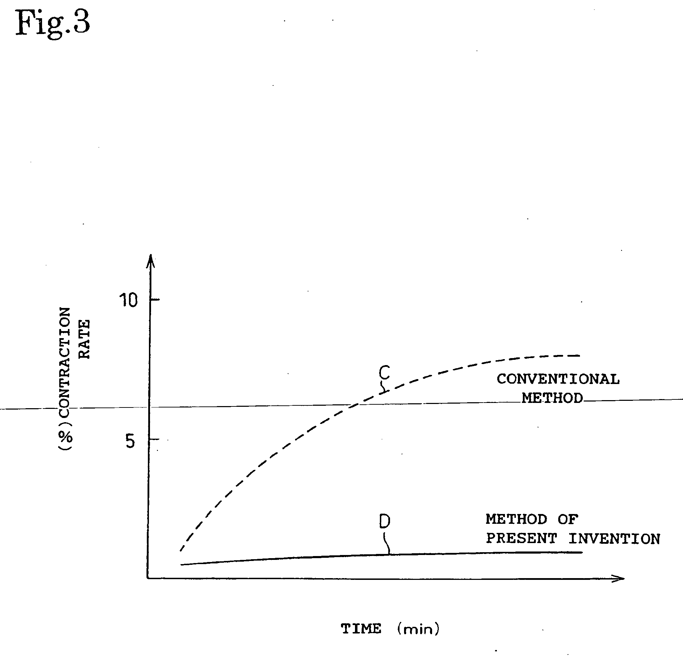

FIG. 3 is a graph of comparison between a conventional rubber strip material winding method in which the peripheral speed of the forming drum is set as high as the extrusion speed of the extruder, and the rubber strip material winding method according to the present invention, the graph showing a difference between the contraction rates of rubber materials after they are formed in the two methods. The graph shows how the contraction rates of the rubber materials change immediately after the forming around the drum, with time (min) on the axis of abscissa. The axis of ordinate shows the contraction rate (%).

In the conventional method (shown by a broken line curve C in FIG. 3), the rubber material begins to be greatly contracted immediately after it is formed and the contraction rate finally reaches about 8%. In contrast, in the embodiment of the present invention, (shown by a solid line D in FIG. 3), contraction of the rubber material is suppressed immediately after it is formed and the contraction rate is kept to approximately 1% to the final. It will be noted that the rate is reduced to about one-eighth the contraction rate in the conventional method.

In the conventional method, an undesirable phenomenon such as exfoliation and the like arises due to the large contraction rate of the rubber material after it is formed. However, according to the rubber strip material winding method of the present invention, contraction of the rubber material after it is formed is suppressed, shape stability of the formed rubber material can be enhanced, and exfoliation and the like of the material can be prevented beforehand.

The method of winding a rubber strip material around a forming drum of the present invention is effective particularly when a rubber strip material having a large contraction rate is used.

In the rubber strip material winding method of the embodiment, the extrusion speed Ve from the extruder 1 is set to be equal to the conventional extrusion speed, and the peripheral speed Vd of the forming drum 5 and the peripheral speed Vr of the applying roller 6 are reduced to about 90% of the extrusion speed Ve. However, if a method is used in which the peripheral speeds Vd, Vr are set as high as conventional peripheral speeds and the extrusion speed Ve is increased, the temperature of the rubber strip material will be increased because the extrusion speed Ve from the die 2 is increased, so that the quality of the rubber strip material may be deteriorated due to burning and the like of the material. Further, productivity will be lowered if the extrusion speed Ve is reduced and the peripheral speeds Vd, Vr are more reduced.

For these reasons, a most appropriate method is to set the extrusion speed Ve of the extruder 1 approximately as high as the conventional extrusion speed and to reduce the peripheral speed Vd of the forming drum 5 and the peripheral speed Vr of the applying roller 6.

## Claims

1. A method of winding a rubber strip material (S) by an applicator (6), which material is extruded from a die (2) by an extruder (1), around a forming drum (5) which is being rotated, wherein the forming drum (5) is rotated to have a peripheral speed (Vd) which is lower than an extrusion speed (Ve) of the rubber strip member (S) from the die (2) of the extruder (1); **characterized in that**
the rubber strip material (S), which is die-swelled after being extruded from the die (2), is wound around the forming drum (5) in a state in which the die-swelled rubber strip material (S) is prevented from being subjected to tensile force at all, thereby being allowed to contract in a path from the die (2) to the forming drum (5), by setting the peripheral speed (Vd) of the forming drum (5) to a reduced speed of 0.6 to 0.95 times the extrusion speed (Ve) of the rubber strip material (S).

2. The method of winding a rubber strip material (S) according to claim 1, wherein the applicator (6) is an applying roller (6) for guiding the rubber strip material (S) to the forming drum (5), pressing it against the forming drum (5), and applying it to the forming drum (5).

## Patentansprüche

1. Verfahren zum Wickeln eines Gummistreifenmaterials (S) mittels einer Applikationsvorrichtung (6), wobei das Material aus einer Düse (2) mittels eines Extruders (1) extrudiert wird, um eine Formtrommel (5), die gedreht wird, wobei die Formtrommel (5) so gedreht wird, dass sie eine Umfangsgeschwindigkeit (Vd) aufweist, die niedriger ist als eine Extrudiergeschwindigkeit (Ve) des Gummistreifenelementes (S) aus der Düse (2) des Extruders (1); **dadurch gekennzeichnet, dass**

das Gummistreifenmaterial (S), das nach dem Extrudieren aus der Düse (2) spritzgequollen ist, um die Formtrommel (5) in einem Zustand gewickelt wird, in dem das spritzgequollene Gummistreifenmaterial (S) daran gehindert wird, dass es überhaupt einer Zugkraft unterworfen wird, wodurch gestattet wird, dass es sich auf einem Weg von der Düse (2) zur Formtrommel (5) zusammenzieht, indem die Umfangsgeschwindigkeit (Vd) der Formtrommel (5) auf eine verringerte Geschwindigkeit des 0,6- bis 0,95-fachen der Extrudiergeschwindigkeit (Ve) des Gummistreifenmaterials (S) eingestellt wird.

2. Verfahren zum Wickeln eines Gummistreifenmaterials (S) nach Anspruch 1, bei dem die Applikationsvorrichtung (6) eine Aufbringungswalze (6) für das Führen des Gummistreifenmaterials (S) zur Formtrommel (5) ist, die es gegen die Formtrommel (5) presst und auf die Formtrommel (5) aufbringt.


**Revendications**

1. Procédé d'enroulement d'un matériau de bande de caoutchouc (S) par un applicateur (6), ce matériau étant extrudé à partir d'une filière (2) par une extrudeuse (1), autour d'un tambour de formage (5) qui est tourné, dans lequel le tambour de formage (5) est tourné de sorte à avoir une vitesse périphérique (Vd) inférieure à une vitesse d'extrusion (Ve) de l'élément de bande de caoutchouc (S) à partir de la filière (2) de l'extrudeuse (1) ; **caractérisé en ce que** le matériau de bande de caoutchouc (S), qui est gonflé à la filière après son extrusion de la filière (2), est enroulé autour du tambour de formage (5) dans un état dans lequel une quelconque exposition à une force de traction du matériau de bande de caoutchouc gonflé à la filière (S) est empêchée, le matériau pouvant ainsi se contracter dans une trajectoire allant de la filière (2) vers le tambour de formage (5), en ajustant la vitesse périphérique (Vd) du tambour de formage (5) à une vitesse réduite, représentant 0,6 à 0,95 fois la vitesse d'extrusion (Ve) du matériau de bande de caoutchouc (S).

2. Procédé d'enroulement d'un matériau de bande de caoutchouc (S) selon la revendication 1, dans lequel l'applicateur (6) est un rouleau d'application (6), destiné à guider le matériau de bande de caoutchouc (S) vers le tambour de formage (5), à le presser contre le tambour de formage (5) et à l'appliquer sur le tambour de formage (5).

# Fig.1

# Fig.2

# Fig.3

**EP 1 818 165 B1**

**REFERENCES CITED IN THE DESCRIPTION**

**Patent documents cited in the description**

- JP 7094155 A
- JP 2004025533 A
- US 6695606 B